# EUROPEAN PATENT APPLICATION

(11) **EP 2 582 119 A1**
(43) Date of publication of application: **17.04.2013**
(21) Application number: 11184887.5
(22) Date of filing: 12.10.2011
(51) Int. Cl.: H04M 1/05

(54) **Wearable accessory for monitoring whether user is looking at portable electronic device**

(71) Applicant: Research In Motion Limited, Waterloo, ON N2L 3W8 (CA)
(72) Inventor: Pasquero, Jerome, Waterloo, Ontario N2L 3W8 (CA); Fyke, Steven Henry, Waterloo, Ontario N2L 3W8 (CA)
(74) Representative: Moore, Barry

(57) **Abstract**

An accessory (102, 402, 500, 520) that includes a light transmitter (100, 400, 502, 522) may be worn by a user of an electronic device (104, 404, 600) that includes a light receiver (106, 406, 654) and a display screen (108, 408, 606). When the accessory (102, 402, 500, 520) is paired to the electronic device (104, 404, 600), the device (104, 404, 600) may be configured to perform one or more behaviours (668) in response to a change intensity of light incident on the light receiver (106, 406, 654), the light having been transmitted from the accessory (102, 402, 500, 520). Example behaviours include activating and deactivating the display screen (108, 408, 606), altering what is displayed on a display screen (108, 408, 606), and turning the electronic device (104, 404, 600) on or off.

## Description

### BACKGROUND

Modern portable electronic devices often have a display screen for displaying information to a user of the portable electronic device. For example, the display screen may display pictures, videos, text or any other information.

### SUMMARY

There are many electronic devices that include display screens, such as televisions, smart phones, DVD players, remote controls, global positioning system devices and e-book readers, to name a few. Many of these electronic devices are portable. Portability typically entails not only a capability of being moved and used from place to place, but also a portable power supply, such as a battery or fuel cell, that can supply power to the device for a limited time. In addition, many portable electronic devices are handheld, that is, sized to be held or carried in a human hand. Information displayed on a display screen of a conventional electronic device may be viewable by any person who looks at the display screen, regardless of the confidentiality of the information or the relevance of the information to the person. The information may also be viewable even when no one is looking at the display screen. Described herein are concepts that include displaying information on the display screen when a user is looking at the display screen, and dimming or turning off the display screen when the user is looking away from the display screen. These concepts may be useful in advancing confidentiality, or may help conserve power in the portable electronic device, or may realize other advantages as well. Making certain items of information viewable only by a particular user of the portable electronic device and not viewable by other users of the portable electronic device may satisfy security concerns. Alternatively or additionally, accommodating individual preferences of multiple users of the same portable electronic device may be of interest, such that, for example, when a particular user is looking at the display screen, only information that is relevant to that particular user is displayed.

An accessory may be paired to an electronic device. The accessory, which is typically portable and handheld, may include a light transmitter. The portable electronic device with which the accessory is paired may include a light receiver that is able to detect light transmitted from the accessory. As will be discussed in more detail below, the accessory and the portable electronic device are "paired" in the sense that they act cooperatively or in concert. The accessory may be embodied as a component having its own functions, such as a headset or headphones or eyeglasses, or an article worn by a user of the device, such as a hat, jewelry or other article of clothing.

In a typical implementation, the accessory transmits light generally in a direction that is normal to the face of the user, such that when the user is looking at the device, light transmitted by the accessory is detectable by the light receiver on the portable electronic device. The electronic device may be configured to perform one or more behaviours in response to a property or quality of the light (which may include a static property or a change in a property) detected by the light receiver. (In general, when a device or a component is "configured to" perform a function, that device or component is capable of performing or able to perform that function.) For purposes of illustration, a quality of light that will be detected may be the intensity of the light. In a simple case, the device may be configured to turn on a display screen of the device in response to detecting light having an incident intensity equal to or greater than a threshold value, and to turn off the display screen in response to detecting light having an incident intensity less than the threshold value. In this manner, the display screen could be automatically turned on in response to the user looking at the device and automatically turned off in response to the user not looking at the device.

In a typical implementation, the accessory includes a light source that is able to transmit light, such as infrared light, a driver to control the light source and a power source to power the driver. The accessory may also include a switch to control power from the power source to the driver, as well as a processor that is able to do one or more of encode and encrypt the light signal transmitted by the light source. The accessory may include an additional light source and an additional driver that is powered by the power source.

The light receiver may be located on the same surface of the electronic device as the display and the light receiver may be able to produce an output as a function of (that is, indicative of or in response to) the incident intensity of the light transmitted from the accessory. The electronic device may be configured to perform a first set of one or more behaviours in response to a change in the output that is a function of an increase in the incident light intensity. The electronic device may also be configured to perform a second set of one or more behaviours in response to a change in the output that is a function of a decrease in the incident light intensity.

The first set of one or more behaviours may include one or more of activating the display, unscrambling what is displayed on the display, turning on the electronic device, displaying confidential information on the display, displaying personal contacts on the display, and any other behaviours.

The second set of one or more behaviours may include one or more of deactivating the display, scrambling what is displayed on the display, turning off the electronic device, not displaying the confidential information on the display, not displaying the personal contacts on the display, and any other behaviours.

The first set of one or more behaviours may be performed in response to a change in the light receiver output that is a function of an increase in the incident light intensity from a value that is less than a threshold value to a value that is equal to or greater than the threshold value. Similarly, the second set of one or more behaviours may be performed in response to a change in the light receiver output that is a function of a decrease in the incident light intensity from a value that is greater than or equal to the threshold value to a value that is less than the threshold value. The threshold value may be equal to or greater than a detectability threshold of the light receiver, where the detectability threshold corresponds to the minimum incident light intensity detectable by the light receiver.

The electronic device may be able to determine one or more properties of the light transmitted from the accessory, including for example, one or more of frequency, phase, header data, and encoding. The electronic device may be able to decrypt encrypted light signals carried by the light received from the accessory. The electronic device may be configured to perform the first set of one or more behaviours and the second set of one or more behaviours only if the one or more properties of the light transmitted from the accessory correspond to the one or more prerequisite light properties stored in the memory of the electronic device.

### BRIEF DESCRIPTION OF DRAWINGS

FIG. 1 is a schematic showing an example electronic device placed in two different positions relative to an accessory, the accessory having an example light transmitter and the electronic device having an example light receiver;

FIG. 2 is an illustration of an example method for pairing an accessory having a light transmitter to an electronic device having a light receiver;

FIG. 3 is an illustration of an example method to be implemented by an electronic device having a light receiver, where the electronic device is paired to an accessory having a light transmitter;

FIG. 4 is a schematic showing an accessory having two example light transmitters, and an electronic device having a light receiver;

FIG. 5-1 is a simplified functional block diagram of an example accessory having a light transmitter;

FIG. 5-2 is a simplified functional block diagram of a wireless headset having a light transmitter; and

FIG. 6 is a simplified functional block diagram of an example electronic device having a light receiver.

### DETAILED DESCRIPTION

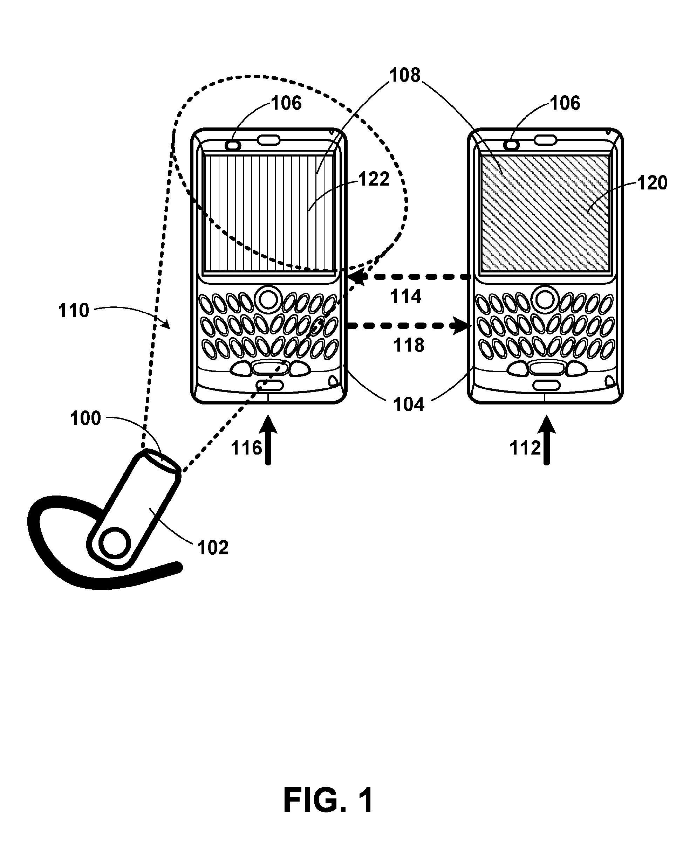

Figure 1 is a schematic showing a light transmitter 100 attached to an accessory 102, illustrated as a wireless headset, and an electronic device 104, illustrated as a portable electronic device, having a light receiver 106 and a display screen 108. The wireless headset may be, for example, a Bluetooth® headset that is to be worn on an ear of a person using the device 104. In a variation, the accessory 102 may be headphones (or another accessory) electrically connected to the portable electronic device 104 with a wire. The light transmitter 100 transmits a cone 110 of light in a direction substantially normal to a front surface of the accessory 102 such that when the accessory 102 is worn by the person, the cone 110 of light is transmitted generally in a direction normal to a face of the person. (In general, a direction is normal to a plane-or a plane-modeled object like a face-when that direction has a significantly larger strictly normal component in comparison to components in the plane. In other words, as used herein, "normal" does not necessarily mean "strictly normal" but includes "substantially normal" and "generally in a normal direction" and the like as well.)

The light transmitter 100 may transmit any light that is suitable for short-range wireless communication, such as infrared (IR) light or visible light. The concepts described herein are not limited to particular kind of light, or that the light transmitter 100 be configured for any particular data transfer rate, but typical data transfer capabilities may vary from a few kilobytes per second to a few gigabytes per second.

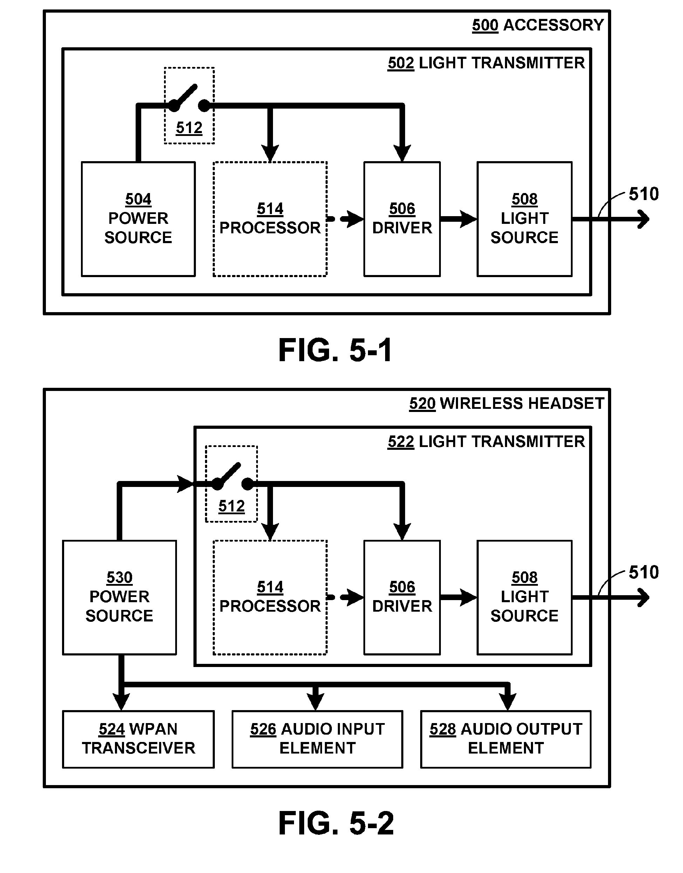

Although the light transmitter 100 is shown as being attached at a particular position on the accessory 102, the light transmitter 100 may be attached at any other position on the accessory, provided that the cone 110 of light is transmitted generally in a direction normal to a face of a person who is wearing the accessory. The light transmitter 100 may be integral to the accessory 102, that is, in a unitary structure with the accessory 102. An example of the accessory 102 having the light transmitter 100 is described in more detail with respect to Figure 5.

Although the light receiver 106 is shown as being positioned on an upper banner of the device 104, the light receiver 106 may be positioned at any other location on the device 104, provided that the light receiver 106 is able to receive light that is incident on the same surface of the device 104 that comprises the display screen 108. In one example implementation, the light receiver 106 may be positioned proximate to the display screen 108. In another example implementation, the light receiver 106 may be located at a position that is not generally covered by a hand of a person using the device 104.

When the device 104 is at a first position (with respect to the light transmitter 100) denoted by an arrow 112, the light receiver 106 is outside of the cone 110 of light transmitted by the light transmitter 100. That is, the light transmitter 100 may emit a directed beam of light, which may spread in the approximate shape of a cone or may be substantially collimated, and when the light receiver 106 of the portable electronic device 104 is outside the cone 110, the light receiver 106 receives a low or negligible amount of light from the light transmitter 100. When the device 104 is moved, as denoted by a dotted arrow 114, to a second position denoted by an arrow 116, the light receiver 106 is within the cone 110 of light transmitted by the light transmitter 100. When the light receiver 106 of the portable electronic device 104 is inside the cone 110, the light receiver 106 receives a considerably greater amount of light from the light transmitter 100. Alternatively, the same result is achievable if (for example) the device 104 is kept stationary and the accessory 102 is moved such that the cone 110 of light transmitted by the light transmitter 100 is incident on the light receiver 106. Furthermore, the same result is achievable if the device 104, initially rotated or tilted away from the accessory 102, is rotated or tilted to face the accessory 102. In conventional terms, when a user wearing the accessory 102 is looking at the display screen 108, the light receiver 106 is inside the cone 110, and when the user wearing the accessory 102 is not looking at (or is unable to see) the display screen 108, the light receiver 106 is outside the cone 110.

The device 104 is configured to detect whether or not its light receiver 106 is inside or outside the cone 110. The light receiver 106 may have (for example) a detectability threshold corresponding to a minimum incident light intensity that is detectable by the light receiver 106. Light having an incident intensity that is less than the detectability threshold will not be detected by the light receiver 106. In one implementation, the light receiver 106 exhibits a binary response for light detection. In this implementation, the light receiver 106 outputs a first value, for example, "0" or "low", if light that is incident on the light receiver 106 has an incident light intensity that is less than the detectability threshold, and outputs a second value, for example, "1" or "high", if light that is incident on the light receiver 106 has an incident light intensity that is equal to or greater than the detectability threshold. In another implementation, the light receiver 106 may be able to quantify - coarsely or finely - an intensity of light that is incident on the light receiver 106 with an incident light intensity that is equal to or greater than the detectability threshold. In this implementation, for example, the light receiver 106 outputs a first value, for example, "0" or "low", if light that is incident on the light receiver 106 has an incident light intensity that is less than the detectability threshold, and if light that is incident on the light receiver 106 has an incident light intensity that is equal to or greater than the detectability threshold, outputs different values, for example "1", "2", "3", etc. depending on how much the incident light intensity is greater than the detectability threshold. The device 104 may be configured to perform a first set of one or more behaviours in response to a first change in the output of the light receiver 106 that is a function of an increase in the incident light intensity. For example, such an increase in incident light intensity might result from moving the device 104 from the first position 112 to the second position 116, as denoted by the dotted arrow 114. The device 104 may also be configured to perform a second set of one or more behaviours in response to a second change in the output of the light receiver 106 that is a function of a decrease in detected light intensity. For example, such a decrease in incident light intensity might result from moving the device 104 from the second position 116 to the first position 112, as denoted by a dotted arrow 118. Thus, if a user of the device 104 with the light receiver 106 wears the accessory 102 with the light transmitter 100, the device 104 may perform the first set of behaviours in response to the user looking at the device 104 and may perform the second set behaviours in response to the user not looking at the device 104.

The first change in the output of the light receiver 106 may be a function of the incident light intensity increasing from a value that is less than a threshold value to a value to a value that is equal to or greater than the threshold value. Similarly, the second change in the output of the light receiver 106 may be a function of the incident light intensity decreasing from a value that is equal to or greater than the threshold value to a value that is less than the threshold value.

In this and the following examples, it may be assumed that the threshold value is the detectability threshold of the light receiver 106, for example, such that the increase in incident light intensity corresponds to a change in the output of the light receiver 106 from "0" or "low" to "1" or "high", and such that the decrease in incident light intensity corresponds to a change in the output of the light receiver 106 from "1" or "high" to "0" or "low". Alternatively, the threshold value is greater than the detectability threshold of the receiver 106 and an indication of the threshold value is stored in a memory of the device 104. In the latter case, the device 104 may be able to quantify the incident intensity of the light for comparison to the indication stored in the memory.

According to one example, the device 104 may be configured such that the first set of behaviours includes activating the display screen 108, and such that the second set of behaviours includes deactivating the display screen 108. Activating the display screen 108 may comprise providing power to the display screen 108 or turning the display screen on. Deactivating the display screen 108 may comprise withdrawing power from the display screen 108 or turning the display screen off. This is illustrated in Figure 1, where slanted lines 120 displayed on the display screen 108 when the device 104 is at the position 112 denote that the display screen 108 has been deactivated, and vertical lines 122 displayed on the display screen 108 when the device 104 is at the position 116 denote that the display screen 108 has been activated. According to this example, the display screen 108 may be activated in response to a user looking at the device 104 while wearing the accessory 102. Similarly, the display screen 108 may be deactivated in response to the user not looking at the device 104 while wearing the accessory 102. Deactivating the display screen 108 may conserve power in the device 104, without requiring the user to take any explicit action other than merely looking away from the device 104 while wearing the accessory 102 or moving the device 104 out of a direct line of sight of the user or turning or tilting the device 104 away from the user's face.

The incident light intensity at the light receiver 106 and thus the output of the light receiver 106 that is a function of the incident light intensity may depend on the proximity of the light transmitter 100 to the receiver 106 or a position of the light receiver 106 within a field of vision of the person wearing the accessory 102 with the light transmitter 100 or on both the proximity and the position. For example, the incident light intensity at the light receiver 106 and the corresponding output of the light receiver 106 may be higher when the light receiver 106 is closer to the light transmitter 100 than when the light receiver 106 is farther from the light transmitter 100. For example, while the cone 110 of light transmitted from the light transmitter 100 is shown in Figure 1 to be relatively narrow and well-defined, the cone 110 may be broader than shown and that an intensity of light in the cone 110 may vary as a function of position along a radius of the cone 110. For example, the intensity may be higher near an axis of the cone 110 and may decrease toward a periphery of the cone 110. In the case of the light transmitter 100 being attached to the accessory 102 as shown in Figure 1, the periphery of the cone 110 may correspond approximately to an outer range of peripheral vision of an average person wearing the accessory 102. Therefore, the incident light intensity at the light receiver 106 and the corresponding output of the light receiver 106 may depend not only on the proximity of the person wearing the accessory 102 with the light transmitter 100, but also on the position of device 104 within the field of vision of the user.

Light incident on the light receiver 106 may be detected better at certain incident angles than at other incident angles. For example, the light receiver 106 may be able to detect light better when the light is incident normal to a surface of the light receiver 106 than when the light is incident at, for example, 75 degrees to the surface. Therefore, the incident light intensity that is detected by the light receiver 106 and thus the output of the light receiver 106 that is a function of the incident light intensity may also depend on an orientation of the light receiver 106 relative to an orientation of the light transmitter 100.

In the case where the device 104 is configured to have a first set of behaviours and a second set of behaviours that include, respectively, activating and deactivating the display screen 108, frequent activations and deactivations may create a potentially jarring visual effect. For example, the user may prefer that the display screen 108 is not deactivated each time the user briefly glances away from the device 104 and then quickly returns his or her gaze to the device 104, but that the display screen 108 is deactivated only if the user looks away from the device 104 for a longer period of time. Thus, the device 104 may be configured to deactivate the display screen 108 only after a certain delay since the light receiver 106 last received light from the light transmitter 100. The delay could be, for example, 2 seconds to 30 seconds, and could be configured according to the user's preferences. Alternatively or additionally, the delay may depend on the importance or the confidentiality or both of information displayed on the display screen 108.

To reduce the potentially jarring visual effect of frequent activations and deactivations of the display screen 108, rather than deactivating the display screen 108 in response to the user not looking at the display screen 108, a signal output to the display screen 108 may be altered such that what is displayed on the display screen 108 in response to the user not looking at the display screen 108 is different than what is displayed in response to the user looking at the display screen 108. For example, what is displayed on the display screen 108 could be scrambled or blurred in response to the user not looking at the display screen.

In addition to activating and deactivating the display screen 108, and scrambling or otherwise altering what is displayed on the display screen 108, numerous other examples of behaviours of the device 104 are contemplated. In one example, if the device 104 is playing a movie, the movie could be paused in response to the user looking away from the device 104 and the movie could be played in response to the user looking back at the device 104. In another example, if the device 104 is playing music, the music could be paused in response to the user looking at the device 104 and the music could be played in response to the user looking away from the device 104. In another example, the user's status on an instant messaging application on the device 104 could be changed depending on whether or not the user is looking at the device 104. If the user is communicating with someone via the instant messaging application and the user suddenly stops looking at the device 104, the user's status could be updated to "Away", and the person at the other end of the conversation could be informed of the change in the user's status. Once the user looks at the device 104 again, the user's status could be updated to "Available".

Configuration of the device 104 to perform different behaviours in response to changes in the incident light intensity and corresponding changes in the output of the receiver 106 may be used to enhance security of information on the device 104. For example, outputs of the light receiver 106 that are functions of lower incident light intensities may result in the display of non-confidential information, whereas outputs of the light receiver 106 that are functions of higher incident light intensities may result in the display of both non-confidential and confidential information. In one example, if high intensity light is detected (for example, when the user is looking at the device 104), all emails that have the word "confidential" in the title may be displayed in the user's inbox, whereas if low intensity light is detected (for example, when the user is looking away from the device 104), all such emails may not be displayed in the user's inbox. In another example, outputs of the light receiver 106 that are functions of lower incident light intensities may result in the display of certain contacts in a list of contacts, whereas outputs of the light receiver 106 that are functions of higher incident light intensities may result in the display of alternative or additional contacts in the list of contacts. For example, only business contacts could be displayed when the user is looking away from the device 104, while both business contacts and personal contacts could be displayed when the user is looking at the device 104.

Example behaviours that may be performed in response to an output that is a function of an increase in incident light intensity may include turning on the device, unlocking the device, activating the display screen, unscrambling a signal output to the display screen, opening an application, resuming play of a paused movie, changing a user's status on an instant messaging application, modifying information displayed within an application, and any other suitable behaviour.

Example behaviours that may be performed in response to an output that is a function of a decrease in incident light intensity may include turning off the device, locking the device, deactivating the display screen, scrambling or altering a signal output to the display screen, closing an application, pausing play of a movie, changing a user's status on an instant messaging application, modifying information displayed within an application, and any other suitable behaviour.

In one example, there may be a minimum change in incident light intensity detected by the light receiver 106 that will cause the device 104 to perform any behaviour. This could be used to prevent the device 104 from performing unintended behaviours, for example, in response to the detection of extraneous light not originating from the light transmitter 100.

The device 104 may be able to determine one or more properties of light transmitted from the accessory 102, including, for example, one or more of frequency, phase, header data, and an encoding scheme that was used by the accessory 102 to encode the light. Encoding or encryption (used here as a kind of encoding in which a signal is encoded according to a technique that makes it difficult for one not knowledgeable about the encoding to decode) may be used to distinguish ambient light-which is meaningless-from the light signal emitted by the light transmitter 100-which is meaningful in that it may indicate whether a user is looking at the device 104. For purposes of simplicity, it will be assumed that the light signal emitted by the light transmitter 100 is encrypted (which generally provides more security than ordinary encoding). The device 104 may be able to decrypt encrypted light signals carried by light received from the accessory 102. The device 104 may be configured to perform certain behaviours when the one or more properties of the light transmitted from the accessory 102 correspond to one or more prerequisite light properties stored in a memory of the device 104, or when the device 104 is able to successfully decrypt encrypted light signals carried by light received from the accessory 102.

The device 104 may be configured to distinguish between light received from one accessory and light received from another accessory, and to perform different behaviours in response to light received from each different accessory. In a simple example, an overall intensity may be used to distinguish between light received from two different accessories. However, different accessories may be distinguished by one or more other properties of the light they transmit.

In one example, the device 104 may be configured to distinguish two different accessories by the frequency or by the range of frequencies (spectral content) of the light they transmit. Alternatively or additionally, the device 104 may be configured to distinguish the accessories by the communication protocols that were used to transmit the light or by the signals that are being communicated in the light. For example, an accessory may be identified by header data encoded in the light signal that is transmitted by the accessory. In this case, the light receiver 106 may produce an encoded output corresponding to the encoded light signal incident on the light receiver 106, and the encoded output may be subsequently decoded by a decoder of the device 104. In general, a light signal may be distinguished by the encoding scheme that was used by the light transmitter, where encoding of light may involve modulation of one or more properties such as amplitude, frequency and phase. This is well known to persons of ordinary skill in the art.

By configuring the device 104 to distinguish between light received from different accessories, the security of information in the device 104 may be enhanced. For example, the device 104 may be configured to respond only to an authorized accessory, and not to any other accessory. An accessory may be determined to be authorized only if one or more properties of the light transmitted from the accessory are determined by the device 104 to correspond to one or more prerequisite light properties stored in a memory of the device 104. The device 104 may authenticate the accessory 102 using any secure authentication protocol as known by persons of ordinary skill in the art. In the case that the device 104 is configured to activate the display screen 108 only in response to light transmitted by an authorized accessory, only that accessory can be used to activate the display screen 108. Thus, even if the device 104 is stolen, the security of the information in the device 104 may still be maintained as long as the authorized accessory is not also stolen along with the device 104.In one example, the device 104 may be configured such that it only responds to light having a particular frequency. Thus, in the case that there exists a plurality of accessories, each one transmitting light at a different frequency, the device 104 will only respond to the particular accessory that transmits light at the particular frequency. Alternatively or additionally, the device 104 may be configured to only respond to light that has been encoded using a particular encoding scheme, as described above. To reduce a risk of signal hacking, encoded light could be time-stamped and that the encoding scheme could be changed after a certain amount of time. Time-dependent encoding schemes may require that the device 104 and the accessory 102 be synchronized. Accessory 102 may comprise some time-keeping mechanism, for example, one or more oscillators.

Security could also be improved by using encryption and decryption techniques, or any other suitable security techniques known to persons of ordinary skill in the art. A secure channel may be set up between the accessory 102 and the device 104, for example, through the exchange of cryptographic keys. For example, header data that is encoded in the light signal comprised in light transmitted by an accessory may include an identifier of the accessory. The header data may be encrypted by the accessory 102 and subsequently decrypted by the device 104, for example, using cryptographic keys. Such an encryption/decryption scheme could be used to prevent a third party device from pretending to be the accessory 102, thereby jeopardizing the security of information on the device 104.

In addition to conserving power and enhancing security, the device 104 having the light receiver 106 could be configured to accommodate one or more preferences of one or more users of the device 104. For example, the device 104 could be configured to select different sets of behaviours to perform for different users by distinguishing between one or more properties of light received from each user's accessory.

For simplicity, in the following example, the device 104 is configured to perform a first set of behaviours in response to a first change in the output of the light receiver 106 that is a function of an increase in the incident light intensity at the light receiver 106 from a value that is less than a threshold value, to a value that is equal to or greater than the threshold value. The device 104 is also configured to perform a second set of behaviours in response to a change in the output of the light receiver 106 that is a function of a decrease in the incident light intensity at the light receiver 106 from a value that is equal to or greater than the threshold value to a value that is less than the threshold value. In this example, a first user of the device 104 has a first accessory that transmits light at a frequency *f₁*, while a second user of the device 104 has a second accessory that transmits light at a frequency *f*₂. Each user might prefer the device 104 to be configured to perform different behaviours in response to changes in the incident light intensity. Accordingly, the first set of behaviours of the first user may differ from the first set of the behaviours of the second user. Similarly, the second set of behaviours of the first user may differ from the second set of behaviours of the second user. For example, the first set of behaviours for the first user may include (1) immediately activating the display screen 108; and (2) displaying text information on the display screen 108 in a large-sized font. Meanwhile, the first set of behaviours for the second user may include (1) activating the display screen 108 after a delay of two seconds; and (2) displaying text information on the display screen 108 in a regular-sized font. The second set of behaviours for the first user may include immediately deactivating the display screen 108, while the second set of behaviours for the second user may include scrambling what is displayed on the display screen 108. The device 104 may be configured such that when the detected light has the frequency *f₁,* the device 104 performs the first set of behaviours of the first user in response to a change in the output of the light receiver 106 that is a function of an increase in incident light intensity from a value that is less than the threshold value to a value that is equal to or greater than the threshold value, while the device 104 performs the second set of behaviours of the first user in response to a change in the output of the light receiver 106 that is a function of a decrease in incident light intensity from a value that is equal to or greater than the threshold value to a value that is less than the threshold value. Similarly, when the detected light has the frequency *f₂*, the device 104 performs the first set of behaviours of the second user in response to a change in the output of the light receiver 106 that is a function of an increase in incident light intensity from a value that is less than the threshold value to a value that is equal to or greater than the threshold value, while the device 104 performs the second set of behaviours of the second user in response to a change in the output of the light receiver 106 that is a function of a decrease in incident light intensity from a value that is equal to or greater than the threshold value to a value that is less than the threshold value. By selecting different sets of behaviours perform for different accessories, the same device 104 can accommodate the preferences of the different users. While the above example involves only one threshold intensity, additional threshold values may be defined such that additional changes in output that are functions of changes in incident light intensity may result in the performance of additional behaviours.

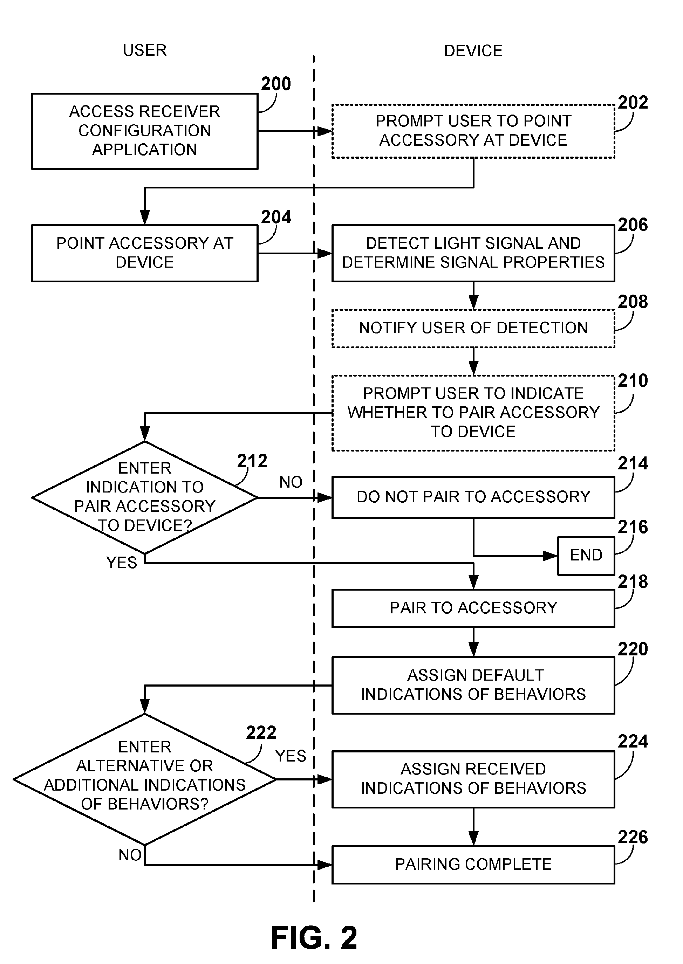

Figure 2 is an illustration of an example method for pairing an accessory having a light transmitter, such as the light transmitter 100, to an electronic device having a light receiver, such as the light receiver 106. The device may optionally require unlocking prior to beginning the method. In general, pairing represents a process by which two devices, such as a portable electronic device and an accessory, establish a rules or parameters for communication with one another. As described herein, pairing may entail setting up secure rules for communication, such that the communication between the devices may be difficult for a third party to intercept or decode. Once two devices are paired, the two devices may communicate with one another and thereby may cooperatively or in concert with one another.

At 200, a user of the device accesses a receiver configuration application of the device via a user input element of the device such as a touch screen, a keyboard, or some other user input element. At 202, the device may optionally prompt the user, for example, via a display of the device, to point the accessory at the device. Although not explicitly shown, the device may also prompt the user to position the accessory and the device in a specific manner, for example, such that the accessory and the device are separated by a specific distance or such that the accessory (or the light transmitter included therein) has a specific orientation relative to the device (or to the light receiver included therein).

At 204, the user points the accessory at the device, optionally in the specific manner indicated by the device, such that light transmitted by the light transmitter of the accessory is incident on the light receiver of the device.

At 206, provided the light incident on the light receiver has an intensity that is equal to or greater than a detectability threshold of the light receiver, the device detects the light. Although not explicitly shown, if the light signal carried by the light transmitted by the accessory has been encrypted, the corresponding encrypted output of the light receiver may be decrypted by the device. The device may also determine one or more properties of the light, including for example, one or more of intensity, frequency or spectral content, phase, header data, and the communication protocol and/or encoding scheme used by the light transmitter. Although not explicitly shown, one or more properties of the light signal may be used for recognition of the accessory from which the light signal was transmitted. For example, the device may already store a profile of an accessory, where the profile includes indications of one or more light signal properties associated with the accessory. If the light signal properties stored in the profile match the properties of the light that is detected, the device may recognize the accessory. An accessory profile may include, for example, an identifier of the accessory and one or more physical properties of the accessory, such as a position or an orientation of one or more light transmitters included in the accessory. At 208, the device may optionally notify the user that the light signal has been detected by the device. For example, the device may notify the user via one or more of a display, an audio output element, or a video output element, or any other suitable notification element. Optionally, if the accessory is recognized by the device, the device may also notify the user of an identifier of the accessory.

At 210, the device may optionally prompt the user, for example via a display, to enter an indication of whether the user wishes to pair the accessory to the device.

At 212, the device checks if the user has entered an indication to pair the accessory to the device or not to pair the accessory to the device. In the case that the user has been notified of an identifier of the accessory, entering the indication to pair the accessory to the device may involve, for example, entering a confirmation to pair the recognized accessory to the device. Alternatively, entering the indication to pair the accessory to the device may involve selecting the accessory to pair to the device from a list of identifiers of accessories, for example, in a drop down menu on the display, where each identifier corresponds to a different accessory profile stored on the device. In another example, if the light detected by the light receiver does not correspond to a recognized accessory, entering the indication to pair the accessory to the device may involve entering an identifier of the accessory and storing the identifier along with one or more properties of the detected light signal in a new accessory profile.

If, at 212, the user enters an indication not to pair the accessory to the device, the device determines at 214 not to pair to the accessory and the method ends at 216. Alternatively, the device may also determine not to pair the accessory at 214 if no indication is received within a certain timeout period, after which the method may end at 216.

If, at 212, the user enters an indication to pair the accessory to the device, the device responds to receipt of this indication by determining at 218 to pair to the accessory. At 220, the device proceeds to assign one or more indications of default behaviours to the accessory, where the indications of default behaviours may already be stored in the device, for example, in a default accessory profile. For example, a default behaviour may be deactivating the display of the device two seconds after the intensity of the light detected by the receiver transitions from a first value that is greater than or equal to a threshold value to a second value that is less than the threshold value. Assignment of an indication of a behaviour may comprise storing the indication of the behaviour in an accessory profile together with the change in intensity of the detected light relative to the threshold intensity value that is required to cause the device to perform the behaviour. Once indications of default behaviours have been assigned at 220, the user may enter at 222 one or more indications of additional or alternative behaviours to assign to the accessory. The user may enter the indications using one or more user input elements of the device, such as a touch screen, a keyboard, and the like. For example, an alternative behaviour is deactivating the display of the device five seconds after the intensity of the light received by the receiver transitions from a first value that is equal to or greater than a threshold value to a second value that is less than the threshold value.

If, at 222, the user enters one or more indications of behaviours to assign to the accessory, the device assigns the received indications of behaviours to the accessory at 224. The received indications of behaviours may replace or be added to the indications of default behaviours previously assigned to the accessory. Following assignment of the received indications of behaviours at 224, the pairing of the accessory to the device is complete at 226. At this point, the device stores a profile for the accessory 224 and the accessory may be subsequently recognized by the device.

If, at 222, the user does not enter any indications of behaviours to assign to the accessory, the pairing of the accessory to the device is complete at 226. In this case, the device may be configured to perform the default behaviours assigned at 220 in response to light from the paired accessory.

Any assigned indications of behaviours, including indications of default behaviours, may be edited, removed or overwritten by indications of alternative behaviours, or that indications of additional behaviours may be added to a set of indications of behaviours. The accessory can be unpaired from the device, for example, by deleting a profile of the accessory from the device. Unpairing (the undoing of pairing such that the previously paired devices no longer have established rules for communication) may be appropriate, for example, if the user loses or discards the light transmitter or the accessory including the light transmitter.

Alternative pairing methods to those illustrated in Figure 2 are contemplated. For example, in the case that the accessory is a wireless headset, the pairing of the wireless headset to the device may involve wireless pairing methods. In this case, it may not be necessary for light transmitted from the accessory to be incident on the light receiver as part of the pairing process, for example, because the device is able to recognize the accessory from wireless communications with the accessory. In another example, in the case that the accessory is a wireless-enabled accessory, the pairing of the accessory to the device may involve both wireless pairing as well as a calibration that involves the accessory being pointed at the device such that light transmitted by the light transmitter of the accessory is incident on the light receiver of the device.

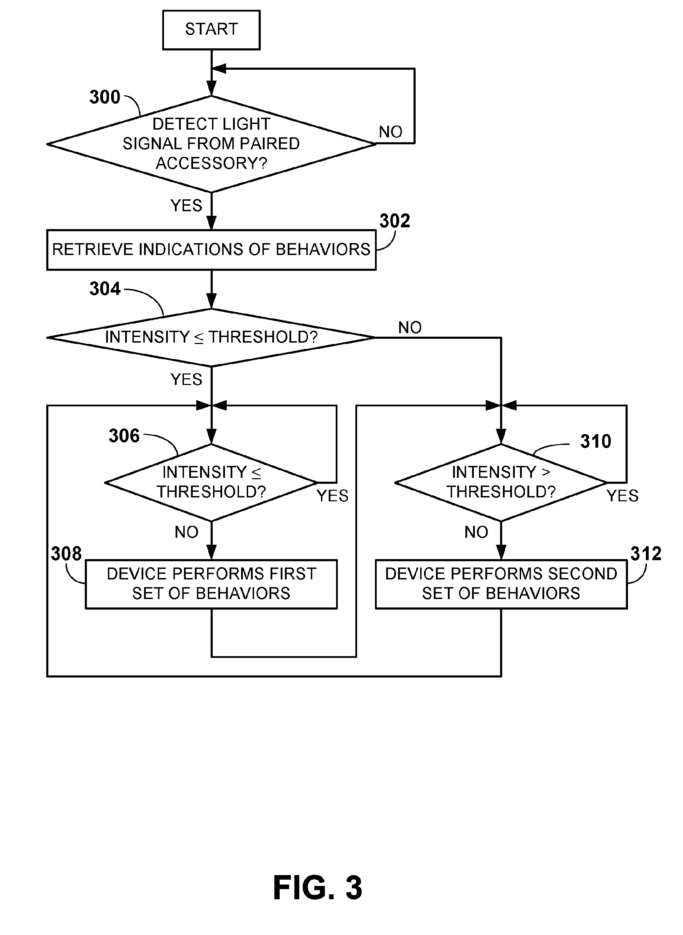

Figure 3 is an illustration of an example method to be implemented by an electronic device, such as the device 104, that is paired to an accessory, such as the accessory 102.

At 300, the device determines whether the light receiver detects a light signal from a paired accessory. As previously noted, the light receiver may only detect light having an incident intensity that is equal to or greater than a detectability threshold of the light receiver. Although not explicitly shown, once light is detected by the light receiver, the device may proceed to decrypt the detected light signal and/or to determine one or more properties of the light signal which may be used to determine if the detected light has been transmitted by a paired accessory.

Once it is determined that the light receiver is detecting light from a paired accessory, the device retrieves indications of one or more behaviours assigned to the paired accessory at 302. For simplicity, in this example the device stores two sets of indications of behaviours: a first set and a second set. The first set of indications of behaviours may represent one or more behaviours that are to be performed in response to a change in the output of the light receiver that is a function of an increase in incident light intensity at the light receiver from intensity value that is less than a threshold value to a value that is equal to or greater than the threshold value. The second set of indications of behaviours may represent one or more other behaviours that are to be performed in response to a change in the output of the light receiver that is a function of a decrease in incident light intensity at the light receiver from intensity value that is equal to or greater than the threshold value to intensity value that is less than the threshold value.

At 304, the device checks if the output of the light receiver is a function of an incident light intensity that is less than the threshold value.

If it is determined at 304 that the incident light intensity is less than the threshold value, the device proceeds to check at 306 if the incident light intensity is still less than the threshold value. Once it is determined at 306 that the incident light intensity is not less than the threshold value (i.e., that the incident light intensity is equal to or greater than the threshold value), the device performs the first set of behaviours at 308.

Examples of the first set of behaviours include one or more of turning on the device, unlocking the device, activating the display screen, unscrambling what is displayed on the display screen, opening an application, resuming play of a paused movie, changing a user's status on an instant messaging application, modifying information displayed within an application, and any other suitable behaviour.

After performing the first set of behaviours at 308 (or if it was determined at 304 that the incident light intensity was not less than the threshold value) the device proceeds to check at 310 if the incident light intensity is still equal to or greater than the threshold value. Once it is determined at 310 that the incident light intensity is not greater than or equal to the threshold value (i.e., that the incident light intensity is less than the threshold value), the device performs the second set of behaviours at 312.

Examples of the second set of behaviours include one or more of turning off the device, locking the device, deactivating the display screen, scrambling or altering what is displayed on the display screen, closing an application, pausing play of a movie, changing a user's status on an instant messaging application, modifying information displayed within an application, and any other suitable behaviour.

Upon performing the second set of behaviours at 312, the device proceeds to check at 306 if the incident light intensity is still less than the threshold value. The device may perform the method illustrated in Figure 3 as long as it is paired to the accessory. It will be known by those of ordinary skill in the art how the method illustrated in Figure 3 may be modified in the case of additional threshold intensities and additional sets of behaviours.

While the accessory 102 illustrated in Figure 1 has a single light transmitter 100, more than one light transmitter could be attached to or included in an accessory to be worn by a user of a device. Multiple light transmitters could be used to obtain additional information that may not be easily obtainable with a single light transmitter, including quantification of the proximity of the light transmitter to the light receiver.

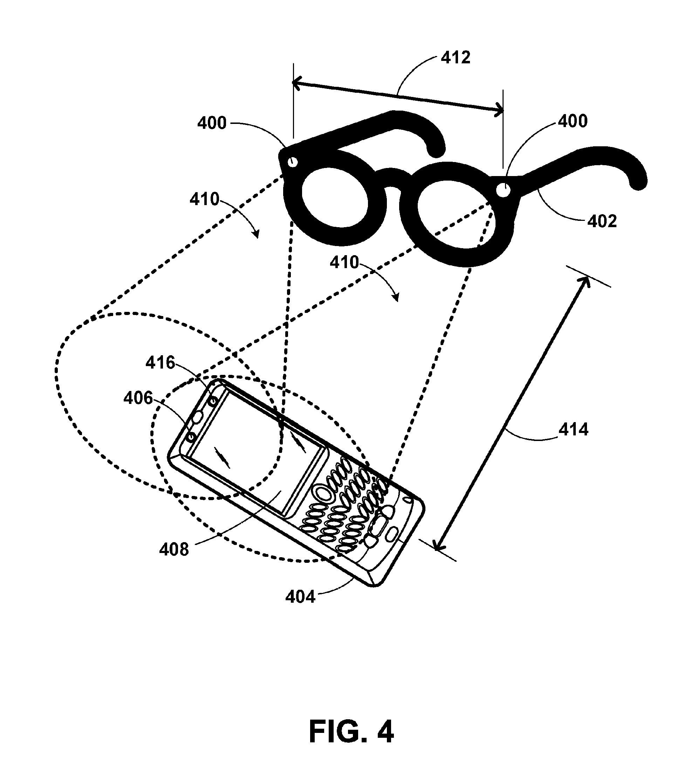

Figure 4 is a schematic showing two example light transmitters 400 attached to an accessory 402, illustrated as a pair of eyeglasses, and an electronic device 404, illustrated as a portable electronic device, the device 404 having a light receiver 406.

Although the light receiver 406 is shown as being positioned on an upper banner of the device 404, it could be positioned at any other location on the device 404, provided that it is able to detect light that is incident on the same surface of the device 404 that comprises the display screen 410.

The two light transmitters 400 transmit two cones 410 of light, where the light is IR light or visible light.

The two light transmitters 400 are separated by a distance 412. Although the light transmitters 400 are shown as being attached to peripheral positions on the accessory 402, they may be attached at any other positions on the accessory 402, provided the distance 412 is non-zero and provided the cones 410 of light are transmitted in a direction substantially normal to the front surface of the accessory 402, such that when the accessory 402 is worn by a person, the cones 410 of light are transmitted generally in a direction normal to a face of the person. Alternatively, the light transmitters 400 may be integral to the accessory 402.

The light transmitted by one light transmitter 400 may be identical to the light transmitted by the other light transmitter 400. Alternatively, the light transmitted by one light transmitter 400 may differ from the light transmitted by the other light transmitter 400, in order to distinguish between the transmitters 400. For example, as described previously with respect to distinguishing different accessories, light signals carried by light transmitted by the transmitters 400 could be distinguished by one or more of intensity, frequency or spectral content, phase, header data, and communication protocol and/or encoding scheme that used by the transmitters 400. The light signals could also be distinguished by how they were encrypted by the different accessories.

If the light transmitted by one light transmitter 400 is not identical to the light transmitted by the other light transmitter 400, it may be possible for the device 404 to determine the proximity of accessory 402 to the device 404, shown as a distance 414 in Figure 4. This may be done by triangulation based on intensity, as known by persons of ordinary skill in the art.

Even if the light transmitted by one light transmitter 400 is identical to the light transmitted by the other light transmitter 400, it is still possible for the device 404 to determine the proximity of the accessory 402 to the device 404. This could be done, for example, using a camera 416 located on the same surface as the light receiver 406. Using the known distance 412 between the light transmitters 400 and an apparent separation between the light transmitters 400 as obtained from a photograph taken with the camera 416, triangulation may be performed to determine the distance 414 between the accessory 402 and the device 404.

In the case that the axes of the cones 412 are not collinear, such that light transmitted by one light transmitter 400 is not transmitted in the same direction as light transmitted by the other light transmitter 400, the device 404 may require two light receivers to detect the light from each light transmitter 400.

The proximity of the device to the accessory is an additional property that may be used to influence the performance of behaviours by the device. For example, similarly to specification of one or more threshold intensity values, one or more threshold proximities may be specified. In one example, the device may be configured to respond only to an accessory within a certain range of the device, such as one meter, for example. Alternatively or additionally, the device may be configured to perform one or more behaviours in response to changes in the proximity of the accessory. For example, if the proximity of the accessory to the device is less than a threshold proximity of one meter, the text displayed on a display screen of the device could be of a normal size, whereas if the proximity of the accessory to the device increases from less than the threshold proximity to equal to or greater than the threshold proximity, the device could respond by increasing the text from the normal size to a larger size. Proximity measurements could be repeated intermittently in order to update the current proximity of the accessory to the device.

The proximity of a light transmitter to a light receiver could be determined by measuring an intensity of light received by the light receiver from a single light transmitter. For example, if the intensity of light at the light transmitter is known, then the measured intensity of light received by the light receiver is equal to the intensity of light at the light transmitter, divided by the square of the distance from the light transmitter to the light receiver.

Figure 5-1 is a simplified functional block diagram of an example accessory 500 having a light transmitter 502. For clarity, some components and features of the light transmitter 502 are not shown in Figure 5-1 and are not explicitly described. Functions included in the light transmitter 502 may be implemented and distributed in any desired way among physical components of the light transmitter 502, such as integrated circuits, discrete components, printed circuit boards (PCBs), assemblies and subassemblies. The accessory 102 and the accessory 402 are examples of the accessory 500. One or both of the light accessories 102 and 402 may include all the features or subsets of the feature of the accessory 500, and may include features that are not described for the accessory 500.

The light transmitter 502 comprises a power source 504, a driver 506 and a light source 508 generating light indicated by an arrow 510. The power source 504 is to provide power to the driver 506 for controlling the operation of the light source 508. The power source 504 may be a battery or any other suitable power source that is able to provide power to the driver 506. The light source 508 may be a light emitting diode (LED) or a lamp or any other light source that is able to transmit light 510. The light source 508 may include one or more lenses or filters (not shown) that are able to control one or more properties of the transmitted light 510, including direction, cone shape, polarization, and the like.

The driver 506 may control one or more of the intensity, frequency, and phase, of the light 510 emitted by the light source 508. The driver 506 may be as simple as a current-limiting resistor to couple the power source 504 to the light source 508. Alternatively, the driver 506 may comprise discrete components such as transistors, resistors, capacitors, amplifiers, and the like.

The light transmitter 502 may optionally comprise an ON/OFF switch 512 to control power from the power source 504 to the driver 506. The light transmitter 502 may optionally comprise a processor 514 that may be powered by the power source 504, optionally under the control of the ON/OFF switch 512. The processor 514 may be used to modulate one or more properties of the light 510, such as amplitude, frequency and phase. Modulation of these properties may be used to include information in a light signal carried by the light 510. The processor 514 may be used to generate a header code to be carried in the light signal carried by the light 510. One or both of the processor 514 and the driver 506 may be used to control the communication protocol used to transmit the light 510. One or both of the processor 514 and the driver 506 may also be involved in encryption of the light signal carried by the light 510.

Although the light transmitter in Figure 5-1 is illustrated as comprising a power source, one or both of the driver and the processor of the light transmitter may alternatively receive power from an external power source that is contained in the accessory. This could be the case, for example, if the accessory is a wireless headset as described with respect to Figure 5-2.

Figure 5-2 is a simplified functional block diagram of an example wireless headset 520 having a light transmitter 522. In addition to the light transmitter 522, the wireless headset 520 comprises a wireless personal area network (WPAN) transceiver 624, an audio input element 526, an audio output element 528, and a power source 530 to provide power to the WPAN transceiver 524, to the audio input element 526 and to the audio output element 528. The power source 530 may be a battery or any other suitable power source.

The light transmitter 522 comprises the driver 506 and the light source 508 generating light indicated by the arrow 510. The light transmitter 522 also optionally comprises the processor 514 as well as the ON/OFF switch 512. However, in contrast to the light transmitter 502, the light transmitter 522 receives power from the power source 530 of the wireless headset 520. Although not explicitly shown, the light transmitter 522 may comprise additional electronic elements to convert power received from the power source 530 to a suitable level for powering the driver 506 and the processor 514, as will be known to those of ordinary skill in the art.

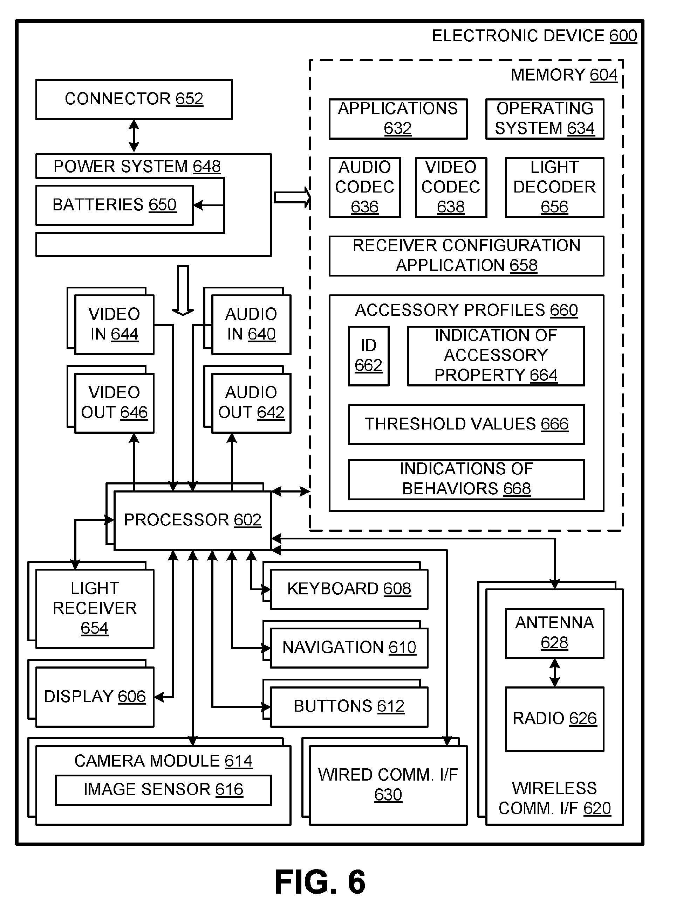

Figure 6 is a simplified functional block diagram of an example electronic device 600. For clarity, some components and features of the device 600 are not shown in Figure 6 and are not explicitly described. Functions included in the device 600 may be implemented and distributed in any desired way among physical components of the device 600, such as integrated circuits, discrete components, printed circuit boards (PCBs), assemblies and subassemblies. The device 104 and the device 404 are examples of the device 600. One or both of the devices 104 and 404 may include all the features or subsets of the feature of the device 600, and may include features that are not described for the device 600.

The device 600 includes a memory 604 coupled to one or more processors 602. The memory may include instructions in the form of executable code for performing one or more aspects of the methods described with respect to Figures 2 and 3.

A non-exhaustive list of examples of the processors 602 includes microprocessors, microcontrollers, central processing units (CPUs), digital signal processors (DSPs), reduced instruction set computers (RISCs), complex instruction set computers (CISCs) and the like. Furthermore, the processors 602 may comprise more than one processing unit, may be part of an application specific integrated circuit (ASIC) or may be a part of an application specific standard product (ASSP).

A non-exhaustive list of examples of the memory 604 includes any combination of the following:
a) semiconductor devices such as registers, latches, read only memory (ROM), mask ROM, electrically erasable programmable read only memory (EEPROM) devices, flash memory devices, non-volatile random access memory (NVRAM) devices, synchronous dynamic random access memory (SDRAM) devices, RAMBUS dynamic random access memory (RDRAM) devices, double data rate (DDR) memory devices, static random access memory (SRAM), universal serial bus (USB) removable memory, and the like;
b) optical devices, such as compact disk read only memory (CD ROM), and the like; and
c) magnetic devices, such as a hard disk, a floppy disk, a magnetic tape, and the like.

The device 600 may include one or more displays 606 and one or more keyboards 608 coupled to the processors 602. Any of the displays 606 may have touch screen functionality.

The device 600 may include one or more navigation actuators 610 such as trackballs, thumbwheels, capacitive touchpads, optical touchpads, joysticks and the like, and may include additional buttons 612 that are located separately from the one or more keyboards 608. The displays 606, the keyboards 608, the navigation actuators 610 and the buttons 612 are exemplary user input components. Other types of user input components may be included in the device 600. A status of each user input component of the device 600 may be readable by the processors 602.

The device 600 may include one or more camera modules 614 including image sensors 616. The processors 602 may operate the image sensors 616 for capturing video images, still images, or both. In an example, the image sensors 616 of different camera modules 614 may be facing opposite directions.

The device 600 may include one or more wireless communication interfaces 620 coupled to the processors 602. The wireless communication interfaces 620 may comply with one or more cellular communication standards, one or more wireless local area network (WLAN) communication standards, and/or one or more personal area network (PAN) communication standards.

The wireless communication interfaces 620 include at least a radio 626 and an antenna 628. The antenna 628 may be shared among more than one wireless communication interface 620.

A non-exhaustive list of examples for standards with which the wireless communication interface 620 may comply includes Direct Sequence - CDMA (DS-CDMA) cellular radiotelephone communication, GSM cellular radiotelephone, North American Digital Cellular (NADC) cellular radiotelephone, Time Division Multiple Access (TDMA), Extended-TDMA (E-TDMA) cellular radiotelephone, wideband CDMA (WCDMA), General Packet Radio Service (GPRS), Enhanced Data for GSM Evolution (EDGE), 3G communication, 4G communication, one or more standards of the 802.11 family of standards defined by the Institute of Electrical and Electronic Engineers (IEEE) for WLAN Media Access Control (MAC) layer and Physical (PHY) layer specifications, one or more Bluetooth® standards developed by the Bluetooth® Special Interest Group (for example, Bluetooth® standards 1.1, 1.2, 2.0, 2.1 and 3.0), one or more versions of the IEEE 802.15.1 standard, one or more versions of the IEEE 802.15.4 standard (Zigbee®), one or more versions of the Wireless Universal Serial Bus® (WUSB®) standard developed by the WUSB® Promoter Group.

The device 600 may include one or more wired communication interfaces 630, for example, a USB interface, an IEEE 1394 (Firewire™) interface, an Ethernet interface or any other suitable non-wireless interface. By way of any of the communication interfaces 620 and 630, the device 600 may be able to establish signaling, voice, video and/or data communication sessions with other devices. A non-exhaustive list of examples of data communication sessions includes sending and receiving data, sending and receiving one or more of electronic mail (e-mail), instant messages, paging messages, short message service (SMS) messages, and any other suitable data communication sessions. For executing communications supported by the device 600, the memory 604 may store respective software applications 632 to be executed by any combination of the processors 602.

In addition to the applications 632, the memory 604 may store an operating system 634 to be executed by the processors 602. The memory 604 may also store data used by the operating system 634 and by the applications 632.

The memory 604 may store an audio coder-decoder (codec) 636 or a video codec 638 or both. A non-exhaustive list of examples for the audio codec 636 includes G.711, G.722, G.723, G.726, G.729, MP3, Windows® Media Audio (WMA), Vector Sum Excited Linear Prediction (VSELP), Digital Speech Standard (DSS), and any other suitable audio codec. A non-exhaustive list of examples for the video codec 638 includes H.261, H.263, H.264, flavors of Moving Picture Experts Group (MPEG), RealVideo®, Windows® Media Video, DivX®, Pixlet®, and any other suitable video codec.

The device 600 may comprise one or more audio input elements 640 and one or more audio output elements 642, all coupled to the processors 602. The device 600 may comprise one or more video input elements 644 and one or more video output elements 646, all coupled to the processors 602.

The applications 632 may comprise a VoIP application that works together with the audio input elements 640, the audio output elements 642, and the audio codec 636. In another example, the applications 632 may comprise a videoconferencing application that works together with the audio input elements 640, the audio output elements 642, the audio codec 636, the video input elements 644, the video output elements 646, and the video codec 638.

The device 600 may comprise a power system 648, one or more batteries 650 coupled to the power system 648, and a connector 652 coupled to the power system 648. The connector 652 is connectible to an external power source (not shown) to provide power for charging the batteries 650 or for operating the device 600 or for both. The power system 648 provides electrical coupling between the external power source and the batteries 650, and provides electrical coupling between the batteries 650 and the electrical components of the device 600 (e.g. the processors 602, the memory 604, and the like). As part of the electrical coupling between the external power source and the batteries 650, the power system 648 may control the charging of the batteries 650 with electrical charge drawn from the external power source.

The device 600 comprises one or more light receivers 654 coupled to the processors 602. Alternatively or additionally, one or more processors (not shown) may be embedded in the light receivers 654. The light receivers 654 may comprise one or more photosensitive portions (not shown) and signal conditioning circuitry (not shown) such that the light receivers 654 are able to convert received light into digital output signals. In one example, a light receiver 654 comprises a photodiode, an oscillator, a controlled gain amplifier (CGA) and filter, a demodulator, an automatic sensitivity adaption/automatic strong signal adaption (AGC/ATC) and digital control, and a microcontroller. Each light receiver 654 may have a detectability threshold, such that light incident on the light receiver 654 is only detected if the incident intensity is equal to or greater than the detectability threshold of the light receiver 654.

Any of the light receivers 654 may be configured to exhibit a binary response for light detection. In other words, the light receiver 654 outputs a first value, for example, "1" or "high", if light that is incident on the light receiver 654 has an incident intensity that is equal to or greater than the detectability threshold of the light receiver 654, and outputs a second value, for example "0" or "low', if light that is incident on the light receiver 654 has an incident light intensity that is less than the detectability threshold of the light receiver 654.

In another implementation, any of the light receivers 654 may be able to quantify - coarsely or finely - an intensity of light that is incident on the light receiver 654 with an incident light intensity that is equal to or greater than the detectability threshold. In this implementation, for example, the light receiver 654 outputs a first value, for example, "0" or "low", if light that is incident on the light receiver 654 has an incident light intensity that is less than the detectability threshold, and if light that is incident on the light receiver 654 has an incident light intensity that is equal to or greater than the detectability threshold, outputs different values, for example "1", "2", "3", etc. depending on how much the incident light intensity is greater than the detectability threshold.

Any of the light receivers 654, optionally in conjunction with the processors 602, may also be able to measure one or more properties of the received light, including, for example, frequency, phase, intensity, etc.

The memory 604 may optionally store a light decoder 656 that is able to decode encoded output produced by the light receiver 654, where the encoded output corresponds to an encoded light signal carried by light received by the light receiver 654, for example, a light signal that has been encoded using the processor 514 of the accessory 500 or the wireless headset 520.

The memory 604 may store a receiver configuration application 658 that may be involved in assigning one or more indications of behaviours to an accessory that may be paired to the device 600. For example, the receiver configuration application 658 may be involved in one or more aspects of the method illustrated in Figure 2, including, for example, prompting the user to point the accessory at the device (as shown at 202), notifying the user that light is being detected by the light receivers 654 (as shown at 208), prompting the user to indicate whether to pair the accessory to the device (as shown at 210), determining not to pair to the accessory (as shown at 214), determining to pair to the accessory (as shown at 218), assigning default indications of behaviours at 220, and assigning received indications of behaviours at 224. The receiver configuration application 658 may also be involved in one or more aspects of the method illustrated in Figure 3, including, for example, retrieving indications of behaviours at 302.

The memory 604 may store one or more accessory profiles 660. Each accessory profile 660 may include an identifier 662 of an accessory and one or more indications of accessory properties 664. The indications of accessory properties 664 may include, for example, one or more properties of the light signal transmitted by the accessory and/or one or more physical properties of the accessory. Example physical properties of the accessory include one or more of the number of light transmitters included in the accessory, a position or an orientation of one or more light transmitters included in the accessory, and a distance between any two light transmitters included in the accessory. The indications of accessory properties 664 may include one or more prerequisite light properties. The electronic device 600 may be configured to perform certain behaviours only if the properties of the received light correspond to the one or more prerequisite light properties. Each accessory profile 660 may include one or more indications of threshold intensity values 666 to be compared to an incident light intensity indicated by the output of the light receiver 654, as well as one or more indications of behaviours 668 corresponding to changes in output of the light receiver that are functions of changes in incident light intensity relative to the threshold intensity values 666.

The indications of behaviours 668 may include for example, indications of default behaviours such as those assigned at 220 in Figure 2, or indications of behaviours received from the user as shown at 224 or both indications of default behaviours and received indications of behaviours. Each accessory profile 660 may include at least one threshold intensity value 666 that corresponds to a first set of indications of behaviours 668 and a second set of indications of behaviours 668, where, for example, the first set of behaviours 668 is to be performed in response to an increase in detected light intensity from an intensity that is less than the threshold intensity value 666 to an intensity that is equal to or greater than the threshold intensity value 666, and the second set of behaviours is to be performed in response to a decrease in detected light intensity from an intensity that is equal to or greater than the threshold intensity value 666 to an intensity that is less than the threshold intensity value 666.

Examples of the first set of behaviours may include turning the device 600 on, unlocking the device 600, opening one or more of the applications 632, modifying one or more parameters used by the applications 632, and activating any of the wireless communication interfaces 620, the wired communication interfaces 630, the displays 606, the keyboards 608, the navigation actuators 610, the buttons 612, the camera modules 614, the audio input elements 640, the audio output elements 642, the video input elements 644, and the video output elements 646.

Examples of the second set of behaviours may include turning the device 600 off, locking the device 600, closing one or more of the applications 632, modifying one or more parameters used by the applications 632, and deactivating any of the wireless communication interfaces 620, the wired communication interfaces 630, the displays 606, the keyboards 608, the navigation actuators 610, the buttons 612, the camera modules 614, the audio input elements 640, the audio output elements 642, the video input elements 644, and the video output elements 646.

Although the light transmitters 100 and 400 are shown as being attached to the accessories 102 and 402, respectively, where the accessories 102 and 402 are respectively illustrated as a wireless headset and a pair of eyeglasses, one or more light transmitters could be attached to or included in any other accessory provided that, when the accessory is worn by a person, the one or more light transmitters are able to transmit light generally in a direction normal to a face of the person. For example, a light transmitter could be attached to or included in a piece of wearable jewelry, such as a necklace or a brooch, or an item of clothing, such as a hat or a vest or a jacket or a necktie or a scarf,. In the case of two light transmitters, each light transmitter could be attached to an earring of a pair of earrings, for example, or to left and right portions of a set of headphones, for example.

Although the light receivers 106 and 406 are shown as components of devices 104 and 404, respectively, one or more light receivers could be attached to or included in a variety of other devices provided that they are able to receive light transmitted from a light transmitter and provided that the device is configured such that it is able to respond to the received light. For example, a computer could be controlled according to the functionality described herein. In this case, the first set of behaviours might include one or more of turning on the computer, activating a display of the computer or a monitor coupled to the computer, unlocking the computer, opening one or more applications on the computer and any other suitable behaviour. The second set of behaviours might include one or more of turning off the computer, deactivating a display of the computer or a monitor coupled to the computer, scrambling, blurring or otherwise altering what is displayed on the display or the monitor, locking the computer, closing one or more applications on the computer and any other suitable behaviour.

In another example, a television could be controlled according to the functionality described herein. In this case, example behaviours in the first set might include one or more of turning on the television, setting a volume of the television to a particular level, displaying a particular television channel, and any other suitable behaviour. Example behaviours in the second set might include turning off the television.

More than one accessory may be paired to an electronic device at the same time and that each paired accessory may be assigned different indications of behaviours. For example, in the case that the electronic device is a television, multiple users may desire to watch the television at the same time, each user wearing a specific paired accessory that has been assigned specific indications of behaviours. In this case, the television may be configured to respond according to the most popular indications of behaviours. Alternatively, the television may be configured to only respond to one dominant accessory whose light, when transmitted simultaneously with other subordinate accessories, dominates the behaviours performed by the television. In one example, a parent might wear the dominant accessory, and a child might wear the subordinate accessory such that the parent may dictate, for example, the television programming that is viewable by the child.

There may be a minimum incident light intensity or a minimum proximity or both required to elicit any behaviour in an electronic device. This minimum incident intensity or minimum proximity may be different for different devices. For example, typically a user might position himself much closer to a display of a portable electronic device than to a television screen. Therefore, the television and the portable electronic device may be configured such that the minimum proximity required to cause the television to perform a behaviour is less than the minimum proximity required to cause the portable electronic device to perform a behaviour.

While the light transmitter and the light receiver have been described herein as being located in an accessory and an electronic device, respectively, the locations of the light transmitter and light receiver could be reversed, that is, the light transmitter could be located in the device and the light receiver could be located in the accessory. The light receiver may consume less power than the light transmitter, thereby permitting the use of a smaller power source. Since space on the accessory may be more constrained than space on the device, having the smaller power source and the light receiver located on the accessory may offer a practical advantage. Reversing the locations of the light transmitter and the light receiver results in a communication system that is not unidirectional. Once the light receiver in the accessory detects the light signal transmitted from the transmitter in the device, the accessory will communicate back to the device to notify the device of a change in state of the light receiver. In the case that the accessory is a wireless headset, this communication may be possible using a wireless transceiver of the wireless headset.

One or more of the various implementations of the concept may realize one or more benefits, some of which have already been mentioned. The smallness of the components may be advantageous in the context of handheld devices, where size and weight may be of special concern.

## Claims

1. A method in an electronic device (104, 404, 600) having a display (108, 408, 606), the method comprising:
producing an output in a light receiver (106, 406, 654) located on a same surface of the electronic device (104, 404, 600) as the display (108, 408, 606), the output as a function of an incident light intensity of light incident on the light receiver (106, 406, 654), the light having been transmitted from an accessory (102, 402, 500, 520) paired to the electronic device (104, 404, 600), the light having been transmitted generally in a direction normal to a face of a person wearing the accessory (102, 402, 500, 520);
performing a first set of behaviours (668) in response to a first change in the output as a function of an increase in the incident light intensity; and
performing a second set of behaviours (668) in response to a second change in the output as a function of a decrease in the incident light intensity.

2. The method as claimed in claim 1, wherein the first change in the output is a function of the incident light intensity increasing from a value that is less than a threshold value (666) to a value that is equal to or greater than the threshold value (666), and wherein the second change in the output is a function of the incident light intensity decreasing from a value that is equal to or greater than the threshold value (666) to a value that is less than the threshold value (666).

3. The method as claimed in claim 2, wherein the threshold value (666) is a detectability threshold of the light receiver (106, 406, 654) that corresponds to a minimum incident light intensity detectable by the light receiver (106, 406, 654), or wherein the threshold value is greater than a detectability threshold of the light receiver (106, 406, 654) that corresponds to a minimum incident light intensity detectable by the light receiver (106, 406, 654).

4. The method as claimed in any one of claims 1 to 3, wherein, if the incident light on the light receiver carries an encrypted light signal, the method further comprises:
producing in the light receiver (106, 406, 654) an encrypted output corresponding to the encrypted light signal; and
decrypting the encrypted output.

5. The method as claimed in any one of claims 1 to 4, wherein, if the incident light on the light receiver carries an encoded light signal, the method further comprises:
producing in the light receiver (106, 406, 654) an encoded output corresponding to the encoded light signal; and
decoding the encoded output.

6. The method as claimed in any one of claims 1 to 5, wherein the first set of behaviours (668) comprises activating the display (108, 408, 606) and the second set of the behaviours (668) comprises deactivating the display, or
wherein the first set of the behaviours (668) comprises unscrambling what is displayed on the display (108, 408, 606) and the second set of the behaviours (668) comprises scrambling what is displayed on the display (108, 408, 606), or
wherein the first set of the behaviours (668) comprises turning on the electronic device (104, 404, 600) and the second set of the behaviours (668) comprises turning off the electronic device (104, 404, 600), or
wherein the first set of the behaviours (668) comprises displaying confidential information on the display (108, 408, 606) and the second set of the behaviours (668) comprises not displaying the confidential information on the display (108, 408, 606), or
wherein the first set of the behaviours (668) comprises displaying personal contacts on the display (108, 408, 606) and the second set of behaviours (668) comprises not displaying the personal contacts on the display (108, 408, 606).

7. The method as claimed in any one of claims 1 to 6, further comprising:
determining one or more properties of the light incident on the light receiver (106, 406, 654); and
performing the first set of one or more behaviours (668) and the second set of one or more behaviours (668) only if the one or more properties of the light incident on the light receiver (106, 406, 654) correspond to one or more prerequisite light properties stored in a memory (604) of the electronic device (104, 404, 600).

8. The method as claimed in claim 7, wherein the one or more properties of the light include one or more of frequency, phase and encoding.

9. An electronic device (104, 404, 600) comprising:
a processor (602);
a display (108, 408, 606) coupled to the processor (602);
a light receiver (106, 406, 654) coupled to the processor (602) and located on a same surface of the electronic device (104, 404, 600) as the display (108, 408, 606), the light receiver (106, 406, 654) able to produce an output as a function of an incident light intensity of light incident on the light receiver (106, 406, 654), the light having been transmitted from an accessory (102, 402, 500, 520) paired to the electronic device (104, 404, 600), the light having been transmitted generally in a direction normal to a face of a person wearing the accessory (102, 402, 500, 520); and
a memory (604) coupled to the processor (602), where the memory (604) is to store indications of a first set of one or more behaviours (668), indications of a second set of one or more behaviours (668), and code (658) which, when executed by the processor (602), causes the electronic device (104, 404, 600) to perform the method as claimed in any one of claims 1 to 8.

10. A method in an accessory (102, 402, 500, 520), the method comprising:
transmitting light from a light source (508) generally in a direction normal to a face of a person using an electronic device (104, 404, 600) when the accessory (102, 402, 500, 520) is worn by the person such that the light is detectable by a light receiver (106, 406, 654) in the electronic device (104, 404, 600), the light receiver (106, 406, 654) located on a same surface of the electronic device (104, 404, 600) as a display (108, 408, 606) of the electronic device (104, 404, 600).

11. The method as claimed in claim 10, wherein the light comprises infrared light.

12. The method as claimed in claim 10 or claim 11, further comprising:
encoding a light signal to be carried by the light and/or encrypting a light signal to be carried by the light.

13. An accessory (102, 402, 500, 520) comprising:
a light source (508), a driver (506) to control the light source (508), and a power source (504, 530) to provide power to the driver (506), the accessory (102, 402, 500, 520) to perform the method as claimed in any one of claims 10 to 12.

14. The accessory (102, 402, 500, 520) as claimed in claim 13, further comprising:
a processor (514) able to encode the light signal and able to receive power from the power source (504, 530).

15. The accessory (102, 402, 500, 520) as claimed in claim 14, wherein one or both of the processor (514) and the driver (506) is able to encrypt the light signal.

16. The accessory (102, 402, 500, 520) as claimed in any one of claims 13 to 15, wherein the accessory (102, 402, 500, 520) comprises a headset (102, 520) wearable on an ear of the person, the headset (102, 520) comprising a wireless personal area network transceiver (524), and one or more of an audio input element (526) and an audio output element (528).

17. The accessory (102, 402, 500, 520) as claimed in any one of claims 13 to 16, wherein the accessory (102, 402, 500, 520) comprises eyeglasses frames (402), or wherein the accessory (102, 402, 500, 520) is attachable to or included in an item of clothing, or wherein the accessory (102, 402, 500, 520) is wearable as jewelry.
